# EUROPÄISCHE PATENTANMELDUNG

(11) **EP 1 816 727 A2**
(43) Veröffentlichungstag der Anmeldung: **08.08.2007**
(21) Anmeldenummer: 07001240.6
(22) Anmeldetag: 20.01.2007
(51) Int. Cl.: H02K 5/173

(54) **Elektromotor**

(30) Priorität: 03.02.2006 DE 202006002068 U
(71) Anmelder: ebm-papst St. Georgen GmbH & Co. KG, 78112 St. Georgen (DE)
(72) Erfinder: Rapp, Nils, 78112 St. Georgen (DE); Berroth, Hansjoerg, 78052 Villingen-Schwenningen-Obereschach (DE)
(74) Vertreter: Raible, Tobias

(57) **Zusammenfassung**

Die Erfindung betrifft einen elektronisch kommutierten Motor (21), welcher aufweist: Einen permanentmagnetischen Außenrotor (22) mit einer Rotorwelle (34), einen Innenstator (50) mit einem Statorblechpaket (52), welches Statorpole (52', 52", 52"', 52"") aufweist, zwischen denen Nuten (54', 54", 54"', 54"") angeordnet sind, eine Kunststoffbeschichtung (77), welche sich durch die Nuten (54', 54", 54"', 54"") erstreckt und zusammen mit dem Statorblechpaket (52) ein Lagerrohr (70) zur Aufnahme mindestens eines Lagers (72, 76) zur Lagerung der Rotorwelle (34) bildet. Die Erfindung betrifft auch einen Lüfter (20), insbesondere einen Klein- oder Kleinstlüfter, enthaltend einen solchen Motor (21). Weiterhin betrifft die Erfindung ein Verfahren zur Herstellung eines solchen Motors.

## Beschreibung

Die Erfindung betrifft einen elektronisch kommutierten Motor, insbesondere einen Klein-oder Kleinstmotor. Solche Motoren werden bevorzugt in Klein- bzw. Kleinstlüftern verwendet.

Klein- und Kleinstlüfter haben in der Regel sehr geringe Abmessungen und dementsprechend ein sehr geringes Gewicht. Beispielsweise haben die Lüfter der ebm-papst Serie 250 Abmessungen von 8 x 25 x 25 mm und ein Gewicht von annähernd 5 g. Bei Lüftern der ebm-papst Serie 400 betragen die Abmessungen 20 x 40 x 40 mm und das Gewicht beträgt weniger als 30 g. Die Motoren sind korrespondierend hierzu noch kleiner und wiegen noch weniger.

Bei derartigen Motoren muss die Montage einfach und unkompliziert sein, um eine kostengünstige Herstellung durch einen hohen Automatisierungsgrad zu ermöglichen. Darüber hinaus kann durch eine weitgehende Automatisierung bei der Herstellung eine gleichmäßige Qualität erzielt werden, welche für eine hohe mittlere Lebensdauer Voraussetzung ist.

Es ist deshalb eine Aufgabe der Erfindung, einen neuen Klein- oder Kleinstmotor bereit zu stellen.

Nach der Erfindung wird diese Aufgabe gelöst durch einen Motor gemäß Anspruch 1 und ein Verfahren gemäß Anspruch 22. Ein solcher Motor lässt sich sehr kompakt bauen und ermöglicht einen Betrieb mit hohen Drehzahlen, also hoher Leistung.

Bevorzugte Ausführungsformen sind Gegenstand der Unteransprüche.

Weitere Einzelheiten und vorteilhafte Weiterbildungen der Erfindung ergeben sich aus den im folgenden beschriebenen und in den Zeichnungen dargestellten, in keiner Weise als Einschränkung der Erfindung zu verstehenden Ausführungsbeispielen, sowie aus den Unteransprüchen. Es zeigt:
- Fig. 1: einen Längsschnitt durch einen Lüfter, welcher von einem Klein- oder Kleinstmotor nach einer Ausführungsform der Erfindung angetrieben wird,
- Fig. 2: eine stark vergrößerte Draufsicht auf die Nabe des Lüfters der Fig. 1,
- Fig. 3: einen perspektivisch dargestellten Längsschnitt durch das Luftleitrohr des Lüfters der Fig. 1 mit einer ebenfalls perspektivischen Darstellung des Innenstators,
- Fig. 4: eine perspektivische Darstellung des Innenstators der Fig. 1 mit Leiterplatte und MOSFET 48,
- Fig. 5: eine Seitenansicht des Innenstators der Fig. 4,
- Fig. 6: eine Schnittansicht des Innenstators der Fig. 4 mit einem der beiden Wälzlager, und mit einer Statorwicklung,
- Fig. 7: eine Schnittansicht des Innenstators der Fig. 6 mit beiden Wälzlagern,
- Fig. 8: eine Seitenansicht des Innenstators der Fig. 1 mit eingespritzten Anschlusselementen 96,
- Fig. 9: eine Draufsicht auf den Innenstator von Fig. 8, gesehen in Richtung des Pfeiles IX der Fig. 8,
- Fig. 10: einen Schnitt, gesehen längs der Linie X-X der Fig. 9,
- Fig. 11: einen Schnitt, gesehen längs der Linie XI-XI der Fig. 9,
- Fig. 12: eine perspektivische Darstellung des Innenstators der Fig. 4 etwa in natürlicher Größe, und
- Fig. 13: einen Längsschnitt durch den Lüfter der Fig. 1 etwa in natürlicher Größe.

In der nachfolgenden Beschreibung beziehen sich die Begriffe links, rechts, oben und unten auf die jeweilige Zeichnungsfigur und können in Abhängigkeit von einer jeweils gewählten Ausrichtung (Hochformat oder Querformat) von einer Zeichnungsfigur zur nächsten variieren. Gleiche oder gleich wirkende Teile werden in den verschiedenen Figuren mit denselben Bezugszeichen bezeichnet und gewöhnlich nur einmal beschrieben.

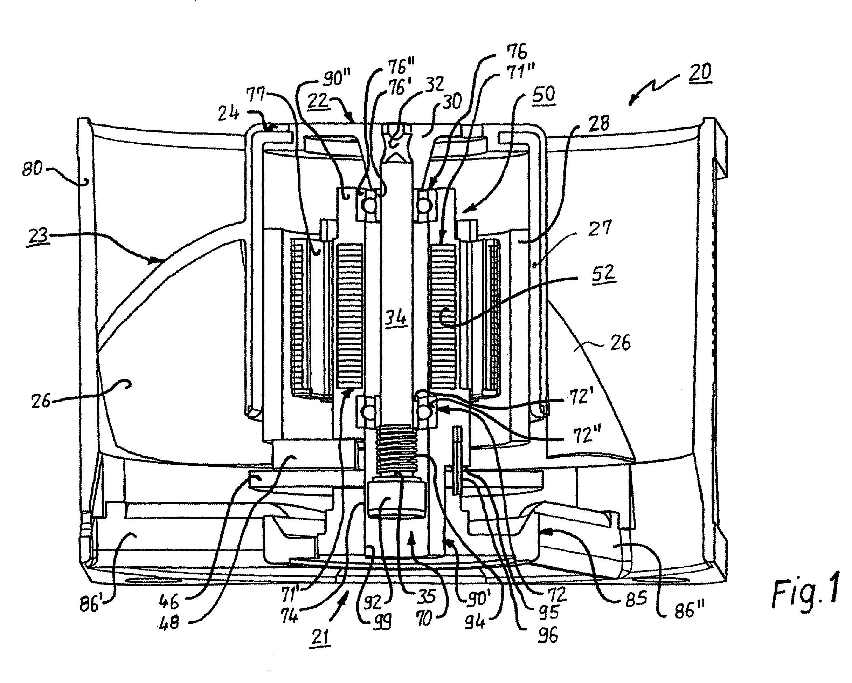

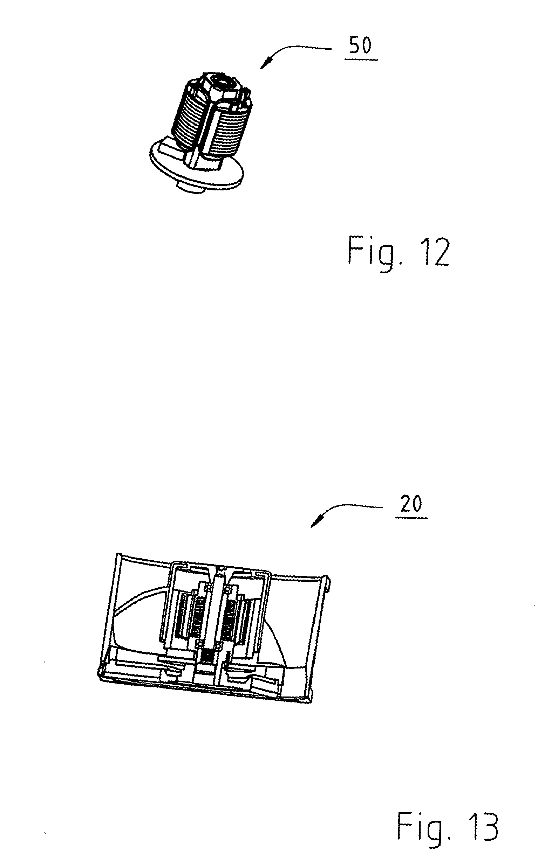

**Fig. 1** zeigt einen Längsschnitt durch einen Axiallüfter 20 mit einem Motor 21 gemäß einer bevorzugten Ausführungsform der Erfindung in stark vergrößertem Maßstab mit einer etwa fünffachen Vergrößerung. Um die für Klein- und Kleinstlüfter erforderlichen geringen Abmessungen zu verdeutlichen, ist der Lüfter 20 in **Fig. 13** beispielhaft im Maßstab von etwa 1:1 gezeigt.

Der Motor 21 ist in einem Luftleitrohr 80 angeordnet und hat einen Außenrotor 22 und einen Innenstator 50. Der Außenrotor 22 hat eine Rotorglocke 24, an deren Außenumfang ein Lüfterrad 23 mit Lüfterflügeln 26 vorgesehen ist. Am inneren Umfang der Rotorglocke 24 ist auf einem weichferromagnetischen Rückschlusselement 27 ein Rotormagnet 28 befestigt, der z.B. vierpolig magnetisiert sein kann. Die Rotorglocke 24 hat einen Boden 30, in dem ein oberes Wellenende 32 einer Rotorwelle 34 befestigt ist, die ein unteres, freies Wellenende 35 hat. Bevorzugt ist die Welle 34 aus Stahl und die Rotorglocke 24 aus Kunststoff. Die Rotorglocke 34 ist durch Kunststoffspritzen am oberen Wellenende 32 befestigt.

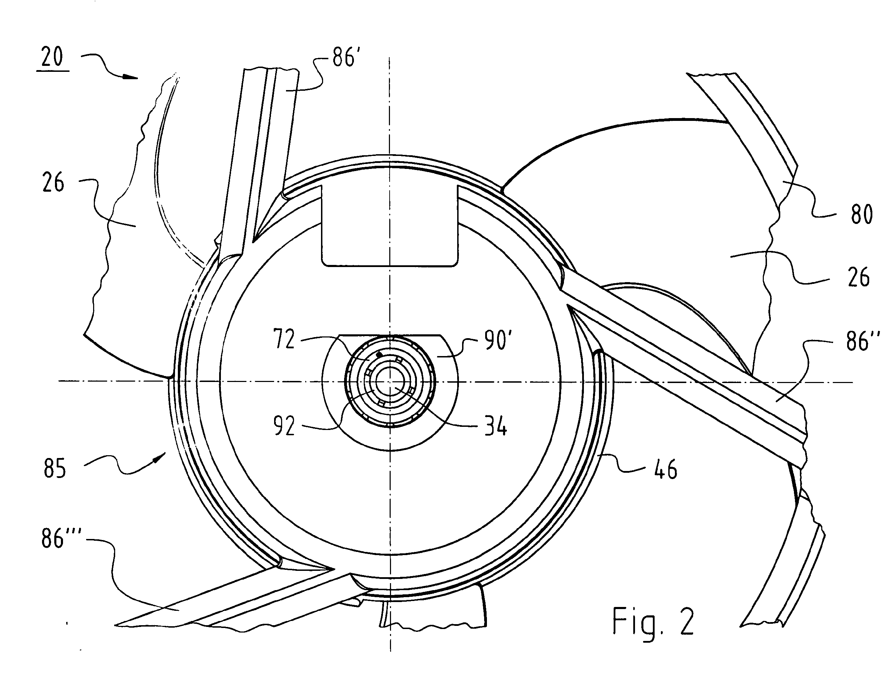

Der Innenstator 50, welcher bei Fig. 2 bis Fig. 11 im Detail beschrieben wird, hat ein Statorblechpaket 52 mit einer Kunststoffbeschichtung 77, welche zusammen ein Lagerrohr 70 zur drehbaren Lagerung der Rotorwelle 34 bilden. Hierzu ist an einem Ende 71' des Statorblechpakets 52 ein Kunststoffteil 90' in der Form eines ersten axialen Fortsatzes der Kunststoffbeschichtung 77 mit einem Lager 72 angeordnet. Am anderen Ende 71" des Statorblechpakets 52 ist ein Kunststoffteil 90" in der Form eines zweiten axialen Fortsatzes angeordnet, in dem sich ein Lager 76 befindet.

Gemäß einer bevorzugten Ausführungsform der Erfindung sind die Kunststoffbeschichtung 77 und die Fortsätze 90' und 90" einteilig ausgeführt, wobei das Lager 72 durch Kunststoffspritzen im Fortsatz 90' befestigt und durch diesen formschlüssig gehalten wird. Alternativ hierzu kann der Fortsatz 90' als separates Bauteil derart ausgeführt werden, dass das Lager 72 durch Einpressen in ihm verankert werden kann. Hierbei kann der Fortsatz 90' unabhängig von der Kunststoffbeschichtung 77 hergestellt werden und in einem einfachen Arbeitsschritt beispielsweise auf diese aufgesteckt werden. Hierzu kann der Fortsatz 90' ein oder mehrere Führungselemente aufweisen, welche solch ein Aufstecken erleichtern. Das Lager 76 kann ebenfalls wahlweise in den Fortsatz 90" eingespritzt oder in diesen eingepresst werden.

Die Lager 72 und 76 sind bevorzugt als Wälzlager ausgeführt, jedoch nicht auf einen bestimmten Lagertyp beschränkt. Vielmehr können verschiedene Lagertypen verwendet werden, z.B. Gleitlager. Das Wälzlager 72 hat einen Innenring 72' und einen Außenring 72", und das Wälzlager 76 hat einen Innenring 76' und einen Außenring 76". Die in den Wälzlagern 72 und 76 drehbar gelagerte Rotorwelle 34 wird dort durch ein Stützglied bzw. Sicherungselement 92 und eine Druckfeder 94 gehalten. Das Stützglied 92, beispielsweise eine Schnappscheibe oder ein sonstiges Rastglied, ist am unteren Ende 35 der Welle 34 in eine Ringnut eingerastet. Die Feder 94 ist zwischen dem Innenring 72' des Wälzlagers 72 und dem Rastglied 92 eingespannt. Durch sie wird ein konischer Fortsatz des Bodens 30 der Rotorglocke 24 gegen den Innenring 76' des Wälzlagers 76 gedrückt, sodass die Welle 34 in den Wälzlagern 72 und 76 des Innenstators 50 verspannt wird. Diese Wirkung der Feder 94 wird dadurch unterstützt, dass der Rotormagnet 28 gegen das Statorblechpaket 52 nach unten versetzt ist, wodurch ein magnetischer Zug auf den Außenrotor 22 entsteht, welcher diesen nach oben zieht.

Am äußeren Umfang 74 des Fortsatzes 90' ist eine Leiterplatte 46 mit einem relativ großen elektronischen Bauteil 48 angeordnet, z.B. einem MOSFET, welcher zum Steuern des Stromes in einer Statorwicklung 97 des Motors 21 vorgesehen ist. Weitere elektronische Bauelemente, z.B. ein Hall-IC, können ebenfalls auf der Leiterplatte 46 angeordnet sein, an welcher Anschlusselemente 96 für die Statorwicklung 97 angelötet sind. Diese Anschlusselemente 96 sind durch Kunststoffspritzen in einer Schulter 95 des Fortsatzes 90' befestigt.

Das untere Ende des Fortsatzes 90' ist durch Einpressen mit einer Nabe 85 verbunden und kann zusätzlich an dieser verklebt und/oder angeschweißt sein. Von dieser Nabe 85 gehen Stege 86' und 86" aus, welche das Luftleitrohr 80 halten.

**Fig. 2** zeigt eine Draufsicht auf die Nabe 85 des Lüfters 20 der Fig. 1. Fig. 2 verdeutlicht die zwischen der Nabe 85 und dem Luftleitrohr 80 angeordneten Stege 86', 86" und 86"', und den Fortsatz 90', dessen freies Ende mit der Nabe 85 verbunden ist.

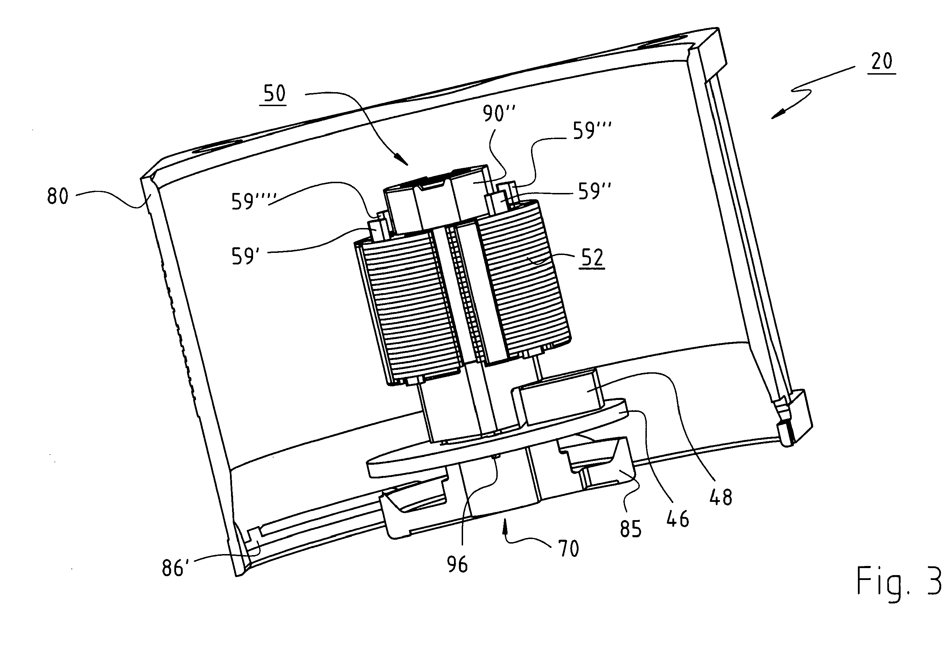

**Fig. 3** zeigt einen perspektivischen Längsschnitt durch das Luftleitrohr 80 des Lüfters 20 mit einer perspektivischen Darstellung des Innenstators 50. Fig. 3 verdeutlicht die Montage des Lüfters 20 gemäß einer bevorzugten Ausführungsform, bei welcher in einem ersten Arbeitsschritt die Leiterplatte 46 mit dem Bauteil 48 auf dem Innenstator 50 angeordnet wird, bevor dieser in einem weiteren Arbeitsschritt an der Nabe 85 befestigt wird.

Wie aus Fig. 3 ersichtlich, weist der Innenstator 50 beispielhaft vier Abstandhalter 59', 59", 59"', 59"" auf. Diese dienen dazu, eine Beschädigung der Statorwicklung 97 beim Einpressen des Innenstators 50 in die Nabe 85 zu verhindern.

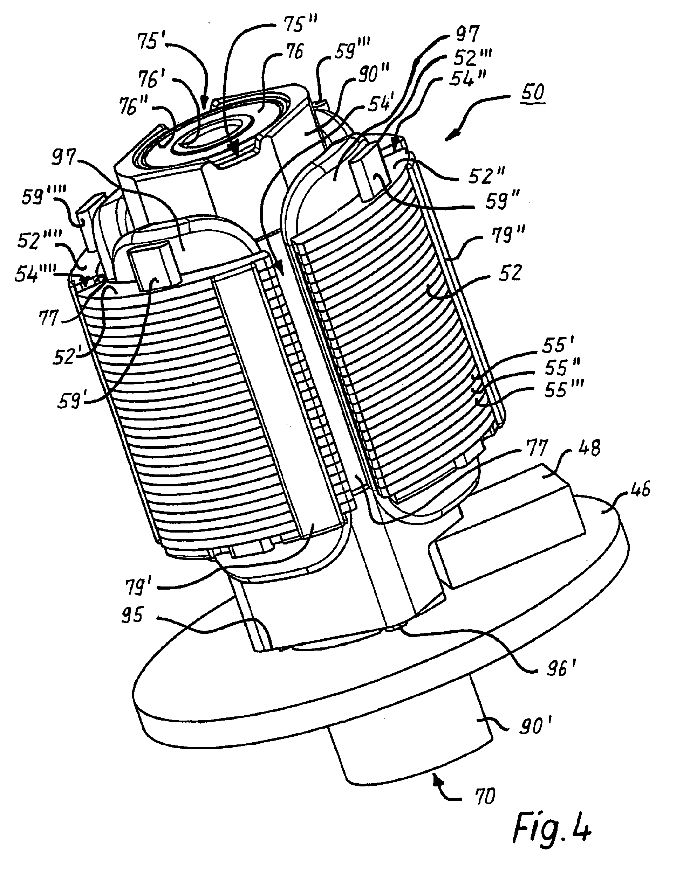

**Fig. 4** zeigt eine räumliche Darstellung des Innenstators 50 (Fig. 3) in etwa zehnfacher Vergrößerung. Zur Verdeutlichung ist der Innenstator 50 in **Fig. 12** beispielhaft im Maßstab von etwa 1:1 gezeigt.

Fig. 4 zeigt die an der Schulter 95 des Fortsatzes 90' anliegende Leiterplatte 46, an der das Anschlusselement 96' angelötet ist, sowie das im Fortsatz 90" befestigte Wälzlager 76. Um das Einpressen des Wälzlagers 76 in den Fortsatz 90" zu erleichtern, hat dieser an seinem oberen Ende zwei Aussparungen 75' und 75".

Das Statorblechpaket 52 enthält Bleche, von denen drei mit 55', 55" und 55"' bezeichnet sind. Das Statorblechpaket 52 ist "packetiert", d.h. seine Bleche haben kleine Löcher, die verprägt werden, sodass Sie einen einheitlichen Block bilden. Zur Festigkeit dieses Blocks kann auch Kunststoff der Kunststoffbeschichtung 77 beitragen, der in das Statorblechpaket 52 eingespritzt wird und zusammen mit diesem das Lagerrohr 70 bildet. Gemäß Fig. 4 bildet dieser Kunststoff an Stellen auf der Außenseite des Blechpakets 52 streifenförmige Kunststoffauflagen 79 aus - zwei Kunststoffauflagen sind beispielhaft mit 79' und 79" bezeichnet -, welche die Festigkeit weiter erhöhen.

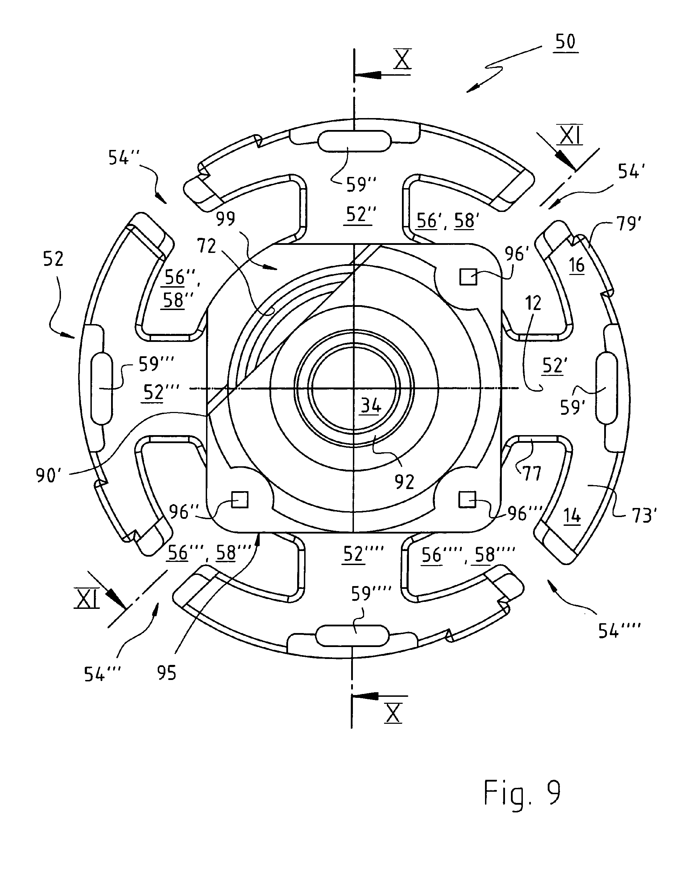

Das Statorblechpaket 52 hat gemäß Fig. 9 ausgeprägte Statorpole 52', 52", 52"', 52"", welche durch Nuten 54', 54", 54"', 54"" voneinander getrennt sind, durch welche sich die Kunststoffbeschichtung 77 erstreckt. Auf den Statorpolen 52', 52", 52"', 52"" ist die Statorwicklung 97 angeordnet, vgl. Fig. 4.

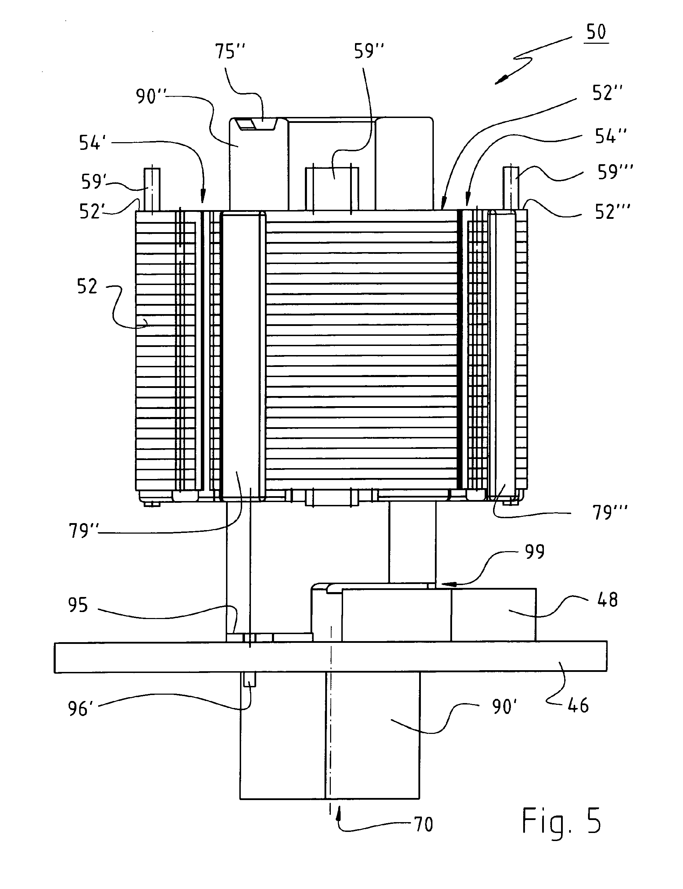

**Fig. 5** zeigt eine Seitenansicht des Innenstators 50 von Fig. 4, aber ohne die Wicklung 97, und verdeutlicht die Schulter 95 des Fortsatzes 90', in welcher das Anschlusselement 96' befestigt ist. In dem Bereich des Fortsatzes 90', in dem das Bauteil 48 auf der Leiterplatte 46 angeordnet ist, hat dieser eine Aussparung 99.

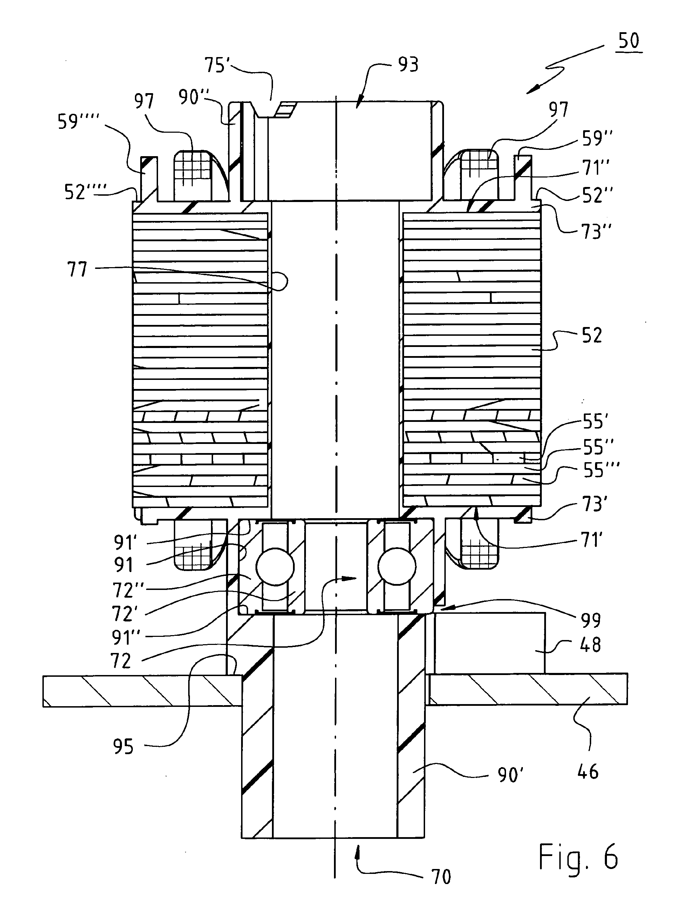

**Fig. 6** zeigt einen Längsschnitt durch den Innenstator 50 und verdeutlicht die Aussparung 99 sowie das von der Kunststoffbeschichtung 77 und dem Statorblechpaket 52 gebildete Lagerrohr 70.

Die Kunststoffbeschichtung 77 bildet am unteren Ende 71' des Statorblechpakets 52 eine Endschicht 73', an welcher der axiale Fortsatz 90' angeordnet ist. Dieser hat eine Ausnehmung 91, in der das Wälzlager 72 angeordnet ist. Die Ausnehmung 91 hat eine erste Schulter 91' und eine zweite Schulter 91 ", welche der ersten Schulter gegenüberliegt. Wie bei Fig. 1 erwähnt, wird zumindest der Außenring 72" dieses Wälzlagers 72 in den Kunststoff des Fortsatzes 90' eingespritzt. Hierzu wird vor dem Kunststoffspritzen ein erstes Werkzeug von oben durch das Statorblechpaket 52 geführt, welches den oberen Rand dieses Außenrings 72" festhält. Sein unterer Rand wird von einem von unten kommenden zweiten Werkzeug festgehalten. Die beiden Werkzeuge dichten das Wälzlager 72 hierbei derart ab, dass beim Kunststoffspritzen kein Kunststoff in das Lager 72 eindringen kann.

Am oberen Ende 71" des Statorblechpakets 52 bildet die Kunststoffbeschichtung 77 eine Endschicht oder Stirnscheibe 73", an welcher der axiale Fortsatz 90" angeordnet ist. Wie aus Fig. 6 ersichtlich, sind die Kunststoffbeschichtung 77 und die Fortsätze 90' und 90" bevorzugt einteilig ausgebildet.

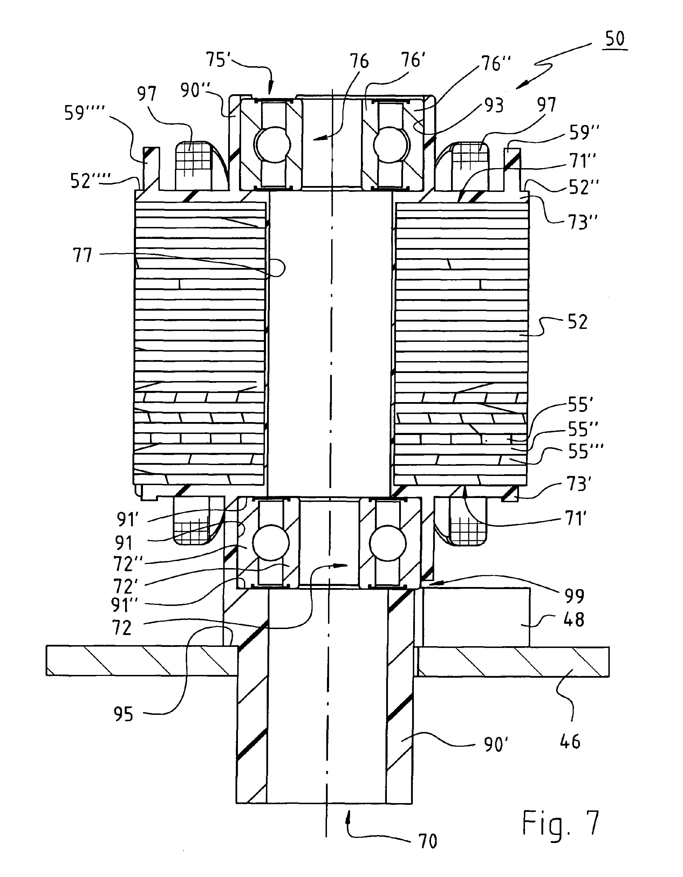

Der Fortsatz 90" hat eine Ausnehmung 93 zur Aufnahme des Wälzlagers 76. Dieses wird bevorzugt in die Ausnehmung 93 eingepresst, vgl. Fig. 7.

**Fig. 7** zeigt eine Schnittansicht des Innenstators 50 mit beiden Wälzlagern 72 und 76.

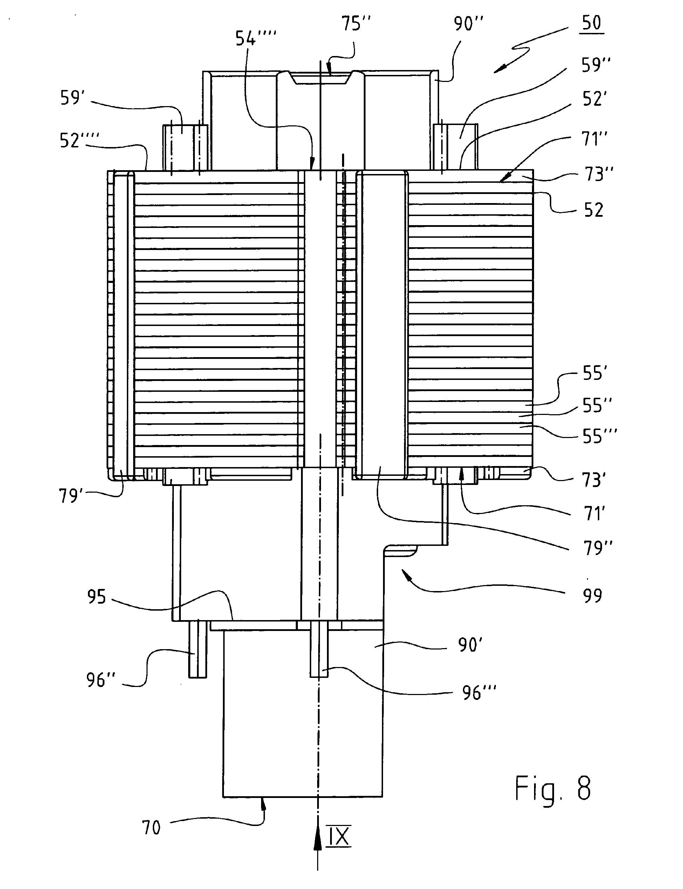

**Fig. 8** zeigt analog zu Fig. 5 eine andere Seitenansicht des Innenstators 50. Im Gegensatz zur Seitenansicht der Fig. 5 ist der Innenstator 50 in Fig. 8 um 45° nach rechts gedreht und ohne die Leiterplatte 46 und das Bauteil 48 dargestellt. Dadurch sieht man in Fig. 8 die zwischen den Polen 52' und 52"" liegende Nut 54"" und die in die Schulter 95 eingespritzten Anschlusselemente 96" und 96"'. Diese sind bevorzugt als Bronzestifte ausgeführt.

**Fig. 9** zeigt eine Draufsicht auf den Innenstator 50. Fig. 9 zeigt eine bevorzugte Ausführungsform des mit der Kunststoffbeschichtung 77 versehenen Statorblechpakets 52 und verdeutlicht die zwischen dessen Polen 52', 52", 52'" und 52"" vorgesehenen Nuten 54', 54", 54"' und 54"".

Wie aus Fig. 9 ersichtlich, hat die Endschicht 73' der Kunststoffbeschichtung 77 an den axialen Enden der Nuten 54', 54", 54"' und 54"" Durchbrechungen 56', 56", 56'" und 56"". Analog hierzu hat die der Endschicht 73' gegenüberliegende Endschicht 73" Durchbrechungen 58', 58", 58"' und 58"". Diese beidseitigen Durchbrechungen ermöglichen die Anordnung der - in Fig. 9 nicht gezeigten - Statorwicklung 97 auf dem Statorblechpaket 52.

Alle Pole 52', 52", 52'" und 52"" haben einen identischen Aufbau. Zur Vereinfachung wird deshalb lediglich der Aufbau des Pols 52' beschrieben. Dieser hat einen Polkern 12 und einen Polschuh mit Polenden oder Polhörnern 14, 16. Das Polhorn 16, auf das die Kunststoffauflage 79' aufgebracht ist, hat einen geringeren Durchmesser als das Polhorn 14. Diese Formgebung wird üblicherweise als Reluktanzschnitt bezeichnet und dient zur Erzeugung eines so genannten Reluktanzmoments. Der Rotormagnet 28 hat zum Zusammenwirken mit dieser Statorform eine trapezförmige Magnetisierung.

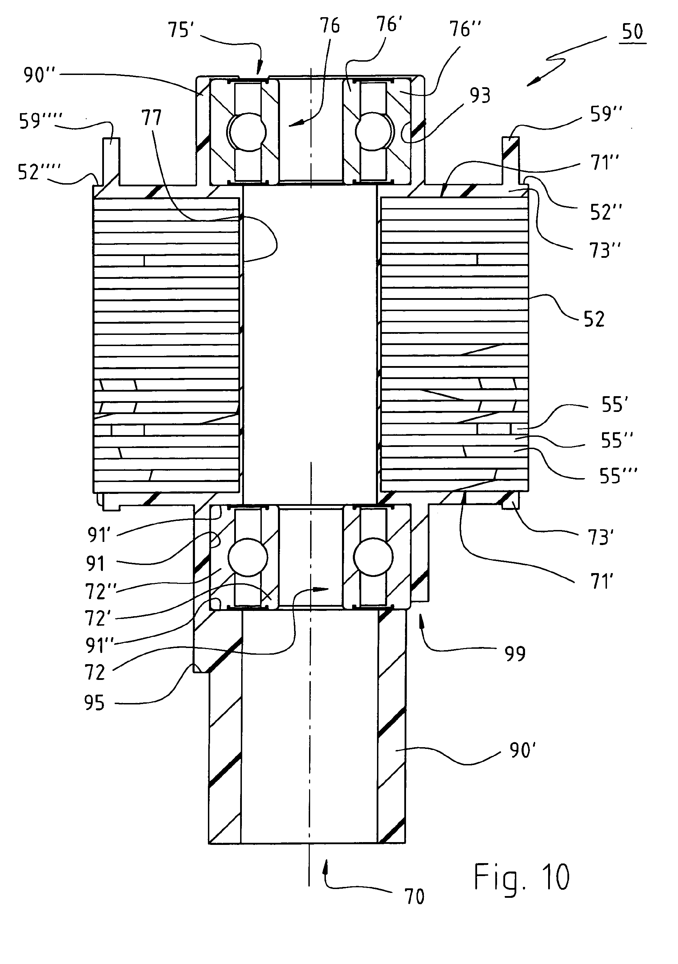

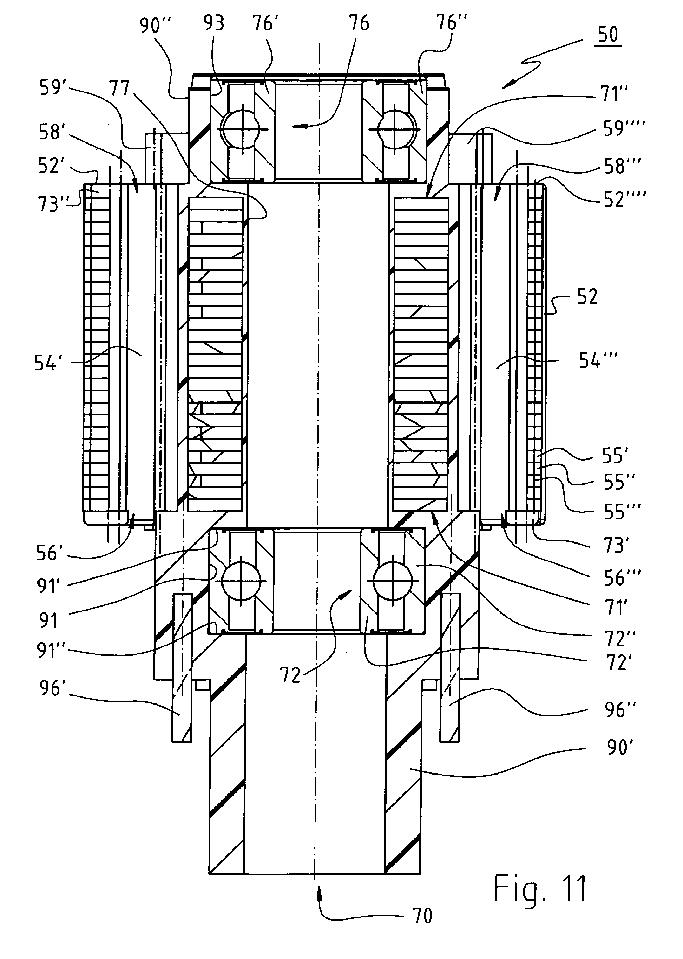

**Fig. 10** zeigt eine Schnittansicht des Innenstators 50 entlang der Schnittlinie X-X der Fig. 9, und **Fig. 11 zeigt** eine Schnittansicht des Innenstators 50 entlang der Schnittlinie XI-XI der Fig. 9. Fig. 11 verdeutlicht die Durchbrechungen 56', 56'" in der Endschicht 73' am Ende 71' des Blechpakets 52, sowie die Durchbrechungen 58', 58"' in der Endschicht 73" an dessen Ende 71".

Es hat sich gezeigt, dass der Lüfter, wie er in Fig. 13 dargestellt ist, durch die beschriebene Art der Lagerung mit einer Drehzahl von 15.000 U/min betrieben werden kann.

Die Erfindung betrifft bevorzugt einen elektronisch kommutierter Motor (21), welcher aufweist: Einen permanentmagnetischen Außenrotor (22) mit einer Rotorwelle (34); einen Innenstator (50) mit einem Statorblechpaket (52), welches Statorpole (52', 52", 52"', 52"") aufweist, zwischen denen Nuten (54', 54", 54"', 54"") angeordnet sind; eine Kunststoffbeschichtung (77), welche sich durch die Nuten (54', 54", 54"', 54"") erstreckt, welche zusammen mit dem Statorblechpaket (52) ein Lagerrohr (70) zur Aufnahme mindestens eines Lagers (72, 76) zur Lagerung der Rotorwelle (34) bildet, und welche für die Lagerung der Rotorwelle (34) einen ersten axialen Fortsatz (90') aufweist, in dem ein erstes Lager (72) durch Kunststoffspritzen befestigt ist. Bevorzugt weist die Kunststoffspritzverbindung eine erste Schulter (91') und eine zweite Schulter (91 ") zur Befestigung des ersten Lagers (72) auf.

Naturgemäß sind im Rahmen der vorliegenden Erfindung vielfache Abwandlungen und Modifikationen möglich.

## Patentansprüche

1. Elektronisch kommutierter Motor (21), welcher aufweist:
Einen permanentmagnetischen Außenrotor (22) mit einer Rotorwelle (34); einen Innenstator (50) mit einem Statorblechpaket (52), welches Statorpole (52', 52", 52"', 52"") aufweist, zwischen denen Nuten (54', 54", 54"', 54"") angeordnet sind;
eine Kunststoffbeschichtung (77),
welche sich durch die Nuten (54', 54", 54"', 54"") erstreckt,
welche zusammen mit dem Statorblechpaket (52) ein Lagerrohr (70) zur Aufnahme mindestens eines Lagers (72, 76) zur Lagerung der Rotorwelle (34) bildet,
und welche für die Lagerung der Rotorwelle (34) einen ersten axialen Fortsatz (90') aufweist, welcher dazu ausgebildet ist, ein erstes Lager (72) formschlüssig zu halten.

2. Motor nach Anspruch 1,
bei welchem das erste Lager (72) in dem ersten axialen Fortsatz (90') durch eine Kunststoffspritzverbindung befestigt ist.

3. Motor nach Anspruch 1 oder 2, bei welchem die Kunststoffbeschichtung (77) an einem ersten Ende (71') des Statorblechpakets (52) eine erste Endschicht (73') bildet, welche an den axialen Enden der Nuten (54', 54", 54"', 54"") entsprechende Durchbrechungen (56', 56", 56"', 56"") aufweist.

4. Motor nach einem der vorhergehenden Ansprüche, bei welchem der erste axiale Fortsatz (90')eine erste Ausnehmung (91) zum Halten des ersten Lagers (72) aufweist.

5. Motor nach einem der vorhergehenden Ansprüche, bei welchem der erste axiale Fortsatz (90') eine erste Schulter (91') und eine zweite Schulter (91 ") zum Halten des ersten Lagers (72) aufweist.

6. Motor nach einem der vorhergehenden Ansprüche, bei welchem das erste Lager (72) ein Wälzlager ist.

7. Motor nach Anspruch 6, bei welchem der Außenring (72") des Wälzlagers (72) zumindest bereichsweise von dem Kunststoff des ersten axialen Fortsatzes (90') umschlossen ist.

8. Motor nach einem der vorhergehenden Ansprüche, bei welchem die Kunststoffbeschichtung (77) und der erste axiale Fortsatz (90') einstückig ausgebildet sind.

9. Motor nach einem der vorhergehenden Ansprüche, bei welchem das erste Lager (72) im Kunststoff des ersten axialen Fortsatzes (90') verankert ist.

10. Motor nach einem der vorhergehenden Ansprüche, bei welchem der erste axiale Fortsatz (90') eine dritte Schulter (95) aufweist, an welcher eine Leiterplatte (46) anliegt.

11. Motor nach Anspruch 10, bei welchem an der dritten Schulter (95) Anschlusselemente (96', 96", 96"') für die Statorwicklung (97) vorgesehen sind.

12. Motor nach Anspruch 11, bei welchem die Anschlusselemente (96', 96", 96"') durch Kunststoffspritzen in der dritten Schulter (95) befestigt sind.

13. Motor nach Anspruch 11 oder 12, bei welchem die Anschlusselemente (96', 96", 96"') Bronzestifte sind.

14. Motor nach einem der vorhergehenden Ansprüche, bei welchem die Kunststoffbeschichtung (77) an einem zweiten Ende (71 ") des Statorblechpakets (52) eine zweite Endschicht (73") bildet, welche an den axialen Enden der Nuten (54', 54", 54"', 54"") Durchbrechungen (58', 58", 58"', 58"") aufweist,
und welche einen zweiten axialen Fortsatz (90") mit einer zweiten Ausnehmung (93) zur Aufnahme eines zweiten Lagers (76) für die Lagerung der Rotorwelle (34) aufweist.

15. Motor nach Anspruch 14, bei welchem das zweite Lager (76) ein Wälzlager ist.

16. Motor nach Anspruch 15, bei welchem der Außenring (76") des zweiten Lagers (76) in die zweite Ausnehmung (93) eingepresst ist.

17. Motor nach Anspruch 15 oder 16, bei welchem der Außenrotor (22) eine Rotorglocke (24) aufweist, welche an einem Innenring (76') des zweiten Lagers (76) anliegt.

18. Motor nach Anspruch 17, bei welchem die Rotorwelle (34) an einem ersten Ende (35) ein Widerlager (82) aufweist, zwischen welchem und einem Innenring (72') des ersten Lagers (72) eine Druckfeder (94) vorgesehen ist, welche diesen Innenring (72') in Richtung zum zweiten Lager (76) beaufschlagt.

19. Lüfter (20), insbesondere Klein- oder Kleinstlüfter, enthaltend einen Motor (21) nach einem der vorhergehenden Ansprüche.

20. Lüfter nach Anspruch 19, welcher ein Lüfterrad (23) mit Lüfterflügeln (26) für einen Axiallüfter aufweist.

21. Motor nach einem der vorhergehenden Ansprüche, welcher als Klein- oder Kleinstmotor ausgebildet ist.

22. Verfahren zur Herstellung eines elektronisch kommutierten Motors
mit einem Innenstator (50) mit einem Statorblechpaket (52), welches Statorpole (52', 52", 52"', 52"") aufweist, zwischen denen Nuten (54', 54", 54"', 54"") angeordnet sind,
mit einer Kunststoffbeschichtung (77),
welche sich durch die Nuten (54', 54", 54"', 54"") erstreckt und
welche zusammen mit dem Statorblechpaket (52) ein Lagerrohr (70) zur Aufnahme mindestens eines ersten Lagers (72, 76) zur Lagerung der Rotorwelle (34) bildet,
bei welchem Verfahren das erste Lager (72) in der Kunststoffbeschichtung durch Kunststoffspritzen befestigt wird.

23. Verfahren nach Anspruch 22,
bei welchem das erste Lager (72) durch Kunststoffspritzen in der Weise befestigt wird, dass es zwischen einer ersten Schulter (91') und einer zweiten Schulter (91") der Kunststoffbeschichtung (77) gehalten wird.

24. Verfahren nach Anspruch 22 oder 23,
mit einer Kunststoffspritzeinreichtung, welche ein erstes Spritzwerkzeug und ein zweites Spritzwerkzeug aufweist,
welches Verfahren die folgenden Schritte aufweist:
- das erstes Spritzwerkzeug wird durch das Statorblechpaket (52) geführt,
- das erste Spritzwerkzeug und das zweite Spritzwerkzeug werden derart zueinander positioniert, dass das erste Lager (72) zwischen dem ersten Spritzwerkzeug und dem zweiten Spritzwerkzeug gehalten wird;
- die Kunststoffbeschichtung (77) wird durch Kunststoffspritzen mit der Kunststoffspritzeinrichtung erzeugt, wobei das erste Lager (72) befestigt wird.

25. Verfahren nach einem der Ansprüche 22 bis 24, bei welchem das erste Lager (72) durch das erste Spritzwerkzeug und das zweite Spritzwerkzeug derart abgedichtet wird, dass beim Kunststoffspritzen kein Kunststoff in das Lager 72 eindringt.
